# EUROPEAN PATENT APPLICATION

(11) **EP 2 720 491 A1**
(43) Date of publication of application: **16.04.2014**
(21) Application number: 12290344.6
(22) Date of filing: 15.10.2012
(51) Int. Cl.: H04W 36/00

(54) **A telecommunications network, a handover protocol analyser and a method of handover**

(71) Applicant: Alcatel Lucent, 75007 Paris (FR)
(72) Inventor: Sapiano, Philip C., Swindon SN5 7DJ, Wiltshire (GB); Cassuto, Philippe S., 91620 Nozay (FR); Pokhariyal, Akhilesh, Swindon SN5 7DJ, Wiltshire (GB)
(74) Representative: Sarup, David Alexander

(57) **Abstract**

A method of handover of a connection with a user terminal from a macrocell base station to a small cell base station, by monitoring in the macrocell network for information which may be useful to a small cell gateway in effecting handover to a small cell under the control of the gateway; and upon detecting an instruction for the macrocell base station to handover to a small cell under the control of the gateway, forwarding the information to the gateway.

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as small cells, metrocells, microcells, picocells, or femtocells, but we use the term small cells generically for cells that are smaller than macrocells. One way to establish a small cell is to provide a small cell base station that operates within a relatively limited range within the coverage area of a macrocell.

The small cell base station is of a relatively low transmission power and hence each small cell is of a small coverage area compared to a macrocell. Small cell base stations have some auto-configuring properties so as to support plug-and-play deployment, for example in which small cell base stations may integrate themselves into an existing macrocell network so as to connect to the core network of the macrocell network. One known type of small cell base station uses a broadband Internet Protocol connection as "backhaul", namely for connecting to the core network.

Network operators require open access small cells to act as small cells integrated into the macrocell network. They are open access in not being restricted to use only by a small group of subscribers, such as a family, as was originally envisaged for small cells. This type of small cell operates according to existing 3GPP RAN standards, e.g. Rel-5, Rel-6, and Rel-7.

In cellular telecommunications networks generally, to identify uniquely which cell is the correct target for handover of a call connection with a user terminal, normal rules are applied where possible, that work for legacy terminals. As regards UMTS networks, the normal rules are that each cell has no more than 32 intra frequency and 32 inter-frequency neighbours, and each of those neighbours uses a different Primary Scrambling Code (PSC) so that a neighbour cell may be uniquely identified from the PSC of signals received from that neighbour. In other words, PSC is an effective cell identifier.

When it comes to networks including small cells, the normal rules are broken. Generally a small number of scrambling codes are available for small cells, for example six, so they are heavily reused, in other words many small cells under a macro cell coverage will have the same PSC. Also, generally there are hundreds of small cells within a macrocell coverage area. In consequence, a handover request, such as a Radio Access Network Application Part (RANAP) Serving Radio Network Subsystem (SRNS) Relocation or a Radio Network Subsystem Application Part (RNSAP) Radio Link (RL) Setup/Addition request over an Iur interface, includes a target cell identifier which instead of indicating just one target cell, is not unique, and so points to many small cells. For example, if there are 10,000 small cells in macrocell areas under one RNC, which corresponds to around 100 small cells per macrocell, but there are only 6 Primary Scrambling Codes available, then a handover request will point to approximately 10,000/6 =1666 targets. Making use of information about the location of the handover source cell, the number of targets may be reduced, say to about twenty. However, multiple handover target cells are prepared for handover even though only one of these handover attempts will be successful. This is a waste of resources.

Some user terminals may be able to decode and report a fully unique cell identifier whilst in connected mode; however these are not available before UMTS Release 9 standards are implemented in networks, see 3GPP Technical Specification 36.306 (LTE) and 3GPP Technical Specification 25.306, and even then they are optional aspects of the standards so many user terminals may not have that functionality. Furthermore unique cell identification in this way involves cooperation between all of macrocell base stations, core network and user terminals. In consequence this may not be a suitable option for small cell deployments.

It is, of course, appreciated that in open access deployments involving both macrocell base stations and small cell base stations in public areas using the same radio frequencies (intra-frequency deployments), handovers between base stations are needed to maintain good performance. The handovers may be soft handovers or hard handovers. The handovers avoid or reduce the mutual interference between downlinks of two overlapping cells and uplink interference caused by user terminals moving from one cell into the coverage area of a neighbour cell.

Methods for improving handover reliability are known where a macrocell base station provides target cell identification assistance information, namely System Frame Number (SFN) (macro) to SFN (target femto) timing information and detailed source cell information but these have disadvantages. Specifically, a known approach to reducing the number of possible target cells is to make use of the user terminals measurements of timing offsets of the small cell base stations as compared to the macrocell, in determining which of the identified small cells is most suitable for handover. This is applicable to handovers from UMTS macrocells to UMTS small cells.

By the way, further background is provided by European Patent Publications EP-A-2244503 and EP-B-2197228.

### Summary

The reader is referred to the appended independent claims. Some preferred features are laid out in the dependent claims.

An example of the present invention is a method of handover of a connection with a user terminal from a macrocell base station to a small cell base station, by monitoring the macrocell network for information which may be useful to a small cell gateway in effecting handover to a small cell under the control of the gateway; and upon detecting an instruction for the macrocell base station to handover to a small cell under the control of the gateway, forwarding said information to the gateway.

Preferred embodiments provide a means of obtaining handover assistance information.

In preferred embodiments a protocol analyser is inserted into an operator's macro network to monitor the Iu and Iub interfaces. The protocol analyser monitors the calls, gathering information. When the analyser detects a trigger for a handover towards a small cell gateway, the analyser forwards the information to the small cell gateway to assist the small cell target determination.

Some preferred embodiments provide improved handover from macrocells to small cells in which the macrocell network is provided by a standard Universal Mobile Telecommunications System (UMTS) Terrestrial Radio Access Network (UTRAN).

The present invention also relates to a corresponding handover protocol analyser and to a corresponding telecommunications network.

### Brief Description of the Drawings

Embodiments of the present invention will now be described by way of example and with reference to the drawings, in which:
Figure 1 is a diagram illustrating a wireless communications network according to an embodiment of the present invention,
Figure 2 is a message sequence diagram illustrating operation of the network shown in Figure 1 including a UMTS small cell gateway responsible for target cell identification, and
Figure 3 is a diagram illustrating registration at the small cell gateway of macro information detected by small cells.

### Detailed Description

We now describe a network including small cell base stations then look in greater detail at identifying the small cell to be handover target.

### Network

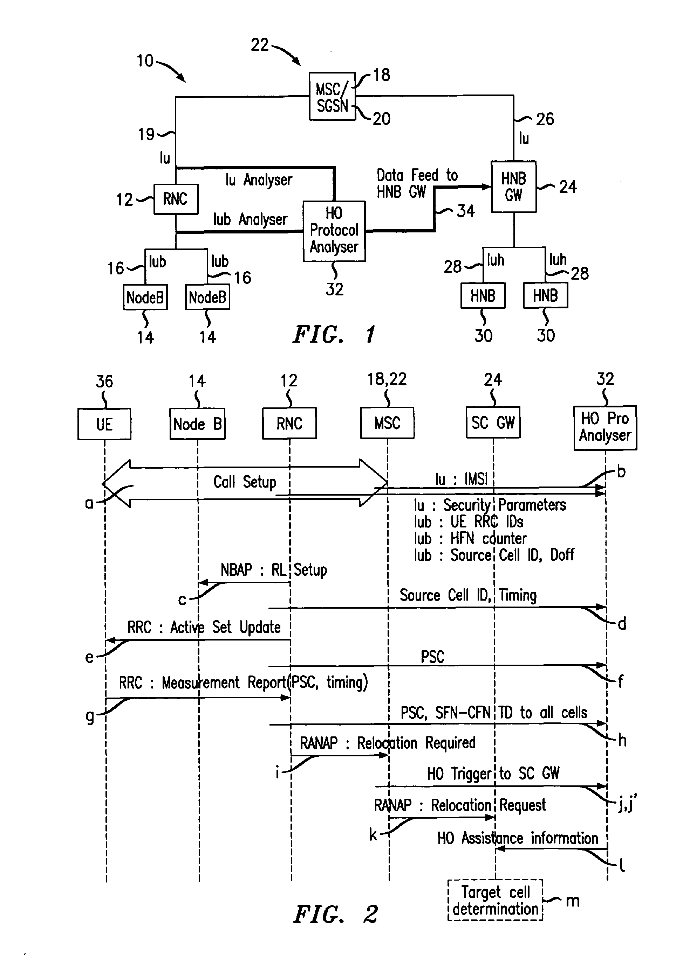

As shown in Figures 1, a network 10 for wireless communications, through which a user terminal (not shown) may roam, includes two types of base station, namely macrocell base stations 14 and small cell base stations 30 (the latter being sometimes called home base stations, HNBs, small cells, or femtocells).

Two macrocell base stations 14 are shown in Figure 1 for simplicity. Each macrocell base station has a radio coverage area (not shown) that is often referred to as a macrocell. The geographic extent of the macrocell depends on the capabilities of the macrocell base station and the surrounding geography.

Two small cell base stations 30 are shown in Figure 1 for simplicity. Each small cell base station has a radio coverage area (not shown) that is often referred to as a femtocell.

As shown in Figure 1, the network 10 includes a radio network controller, RNC, 12. The radio network controller, RNC 12, is connected to each of several macrocell base stations 14 by a respective Iub interface 16 so as to control operations of the macrocell base stations 14 . The radio network controller 12 is operable to route traffic via circuit-switched and packet-switched networks. For circuit-switched traffic, a mobile switching centre 18 is provided with which the radio network controller may communicate over an Iu interface 19. For packet-switched traffic, the radio network controller communicates with a serving general packet radio service support node (SGSN) 20 over the Iu interface 19. In this example, the MSC 18 and SGSN 20 are included in a single unit 22 which is part of a telecommunications core network. The MSC 18 and SGSN 20 are each connected to a small cell gateway 24 by an Iu interface 26. The small cell gateway 24 is connected via respective Iuh interfaces to multiple femtocell base stations 30, denoted HNB (which stands for home NodeB) in Figure 1.

It is possible for a mobile terminal (not shown in Figure 1) within the macrocell coverage area (not shown) to communicate with the macrocell base station 14 in known manner. When the mobile terminal enters into the coverage area of the small cell base station 30 it may be desirable to handover the connection with the mobile terminal from the macrocell base station 14 to the small cell base station 30.

As the reader will understand, it can be considered that a telecommunications network operator deploys small cell base stations via a small cell gateway as an overlay to an earlier deployment of macrocell base stations.

As shown in Figure 1, a handover protocol analyser 32 is provided in the network to monitor the interfaces in the macrocellular network, specifically the Iu interface 19 and the Iub interfaces 16. In other examples (not shown) more than one handover protocol analyser is provided in the network.

Monitoring may be considered as checking for a certain type of messaging in a transmission without interfering with that transmission.

The Iu interface 19 is monitored by monitoring for Radio Access Network Application Part (RANAP) messaging. This is in order to get International Mobile Subscriber Identity information, radio interface security parameters, and detect Relocation messages.

The Iub interfaces 16 are monitored by monitoring for NodeB Application Part (NBAP) and Radio Resource Control (RRC) messaging. NBAP is a standard protocol from RNC to macrocell base station ("Node B") and is defined in Third Generation Partnership Project (3GPP) Technical Specification 25.433.

As indicated in Figure 1, in this example the Iub interfaces 16 terminate onto a smaller number of physical interfaces, namely one physical interface 16' at this example.

As shown in Figure 1, the handover protocol analyser 32 (which may be considered as an Iu analyser and Iub analyser) has an interface 34 to the small cell gateway 24. Information gleaned from the monitoring that will assist the small cell gateway 24 in handover target identification is provided by the handover protocol analyser 32 via the interface 34 to the small cell gateway 24. In this example, that information includes:
the International Mobile Subscriber Identity (IMSI) of the user terminal to be handed over,
radio link information of the source cell, namely source Cell ID and timing information (specifically Chip offset and/or Frame offset), and
user terminal's measurement report information (reported primary scrambling codes, System Frame Number to Connection Frame Number information as identified in 3GPP Technical Specification 25.215 section 5.1.8, and radio frequency.

### Operation

As mentioned above, the Iu interface 19 is monitored by monitoring for Radio Access Network Application Part (RANAP) messaging. This is in order to get International Mobile Subscriber Identity information, radio interface security parameters, and detect Relocation messages.

Specifically, the handover protocol analyser 32 monitors the RNC 12 activity for each of the user terminals connected to the RNC 12. When the analyser 32 detects a RANAP Relocation Required message having a target RNC Identifier or Location Area Identifier (LAI) of the small cell gateway, the analyser 32 extracts the relevant information to assist handover and passes that to the small cell gateway for the purpose of handover target identification assistance. An example of this is shown in Figure 2.

As shown in Figure 2 , a call is set up (step a) involving a mobile user terminal (UE) 36.The analyser 32 probes (step b), in other words monitors, the Iu interface to determine the user terminal's International Mobile Subscriber Identity and security parameters used during call setup, and monitors the Iub interface for the user terminal's radio resource control (RRC) identifiers, the Hyper Frame Number (HFN)count, the source cell ID and Default DPCH Offset value, denoted D_{off}, defined in 3GPP Technical Specification 25.402 as current on 1^{st} September 2012.

The user terminal then goes into a process of soft handover on the macrocell base station 14 with another macrocell base station (not shown) firstly involving an NBAB Radio Link setup message being sent (step c) from the RNC 12 to the macrocell base station 14. This message is inspected (in other words probed) by the handover protocol analyser 32 to obtain (step d) the source cell ID and timing information. The soft handover process includes the RNC 12 sending (step e) a radio resource control Active Set Update message to the user terminal. This message is inspected by the handover protocol analyser 32 to obtain (step f) the Primary Scrambling code.

The user terminal then sends (step g) via the macrocell base station 14 to the RNC a radio resource control (RRC) measurement report for handover including detected PSCs of detected cells and timing information. This measurement report is inspected by the analyser 32 to provide (step h) the detected primary scrambling codes and System Frame Number to Connection Frame Number (SFN-CFN) information of System Frame Number to Connection Frame Number (SFN-CFN) Timing Difference (TD).

As part of the handover, a Relocation Required message is then sent (step i) from the RNC 12 to the Mobile Switching Centre 18 via the Iu interface which is probed (step j) by the analyser 32 causing the analyser to determine that the relocation is triggered towards the small cell gateway. The MSC 18 sends (step k) a RANAP relocation request to the small cell gateway. This causes the handover analyser 32 to forward (step *l*) its collected handover assistance information, namely Source Cell ID, the detected primary scrambling codes and System Frame Number to Connection Frame Number (SFN-CFN) Timing Difference (TD) to the small cell gateway in respect of that user terminal.

The small cell gateway then uses (step m) the received handover assistance information to compare against corresponding information regarding the small cells under its control in order to determine the target cell. The small cell whose information is the best match is selected as the handover target.

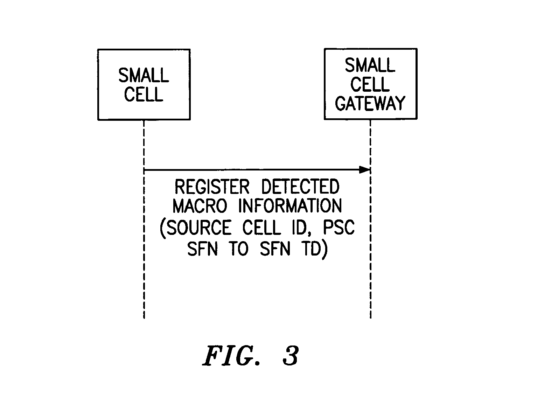

As shown in Figure 3, this corresponding information, which was reported before-hand to the small cell gateway by each small cell under the control of the gateway, includes source Cell ID, primary scrambling code, and the macro neighbour timing information. This macro neighbour timing information is specifically System Frame Number to System Frame Number (SFN-SFN) Timing Difference (TD).

The SFN to SFN TD has a known relation to the SFN to CFN TD.

### Some variants

In an otherwise similar example, messaging on the Iur interface between RNCs in the macrocell network can additionally be monitored. This may give more information useful to the small cell gateway in assisting handover.

In some other examples, the small cell base stations are connected to controller which is an RNC or RNC-like processor (instead of to a small cell gateway) and the interfaces between that controller and the small cell base stations are Iub interfaces.

In some other examples, when there is an Iur interface between the RNC and small cell gateway, the handover protocol analyser monitors this additional interface also, specifically the RNSAP messages involved in order to obtain information useful for handover assistance to the small cell gateway.

### General

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of handover of a connection with a user terminal from a macrocell base station (14) to a small cell base station (30), by
monitoring in the macrocell network for information which may be useful to a small cell gateway in effecting handover to a small cell base station (30) under the control of the gateway; and
upon detecting an instruction for the macrocell base station to handover to a small cell under the control of the gateway, forwarding the information to the gateway.

2. A method according to claim 1, in which the monitoring and forwarding are done by a handover protocol analyser connected to at least one interface in the macrocell network.

3. A method according to claim 1 or claim 2, in which the instruction for the macrocell base station to handover to a small cell is detected on an Iu interface (19) between a base station controller (12) and a higher level controller (22).

4. A method according to any preceding claim, in which the monitoring comprises obtaining at least some of the information from an Iub interface (16) between the base station controller (12) and the macrocell base station (14)

5. A method according to any preceding claim, in which the monitoring comprises storing the information for forwarding to the gateway.

6. A method according to any preceding claim, in which the monitoring comprises obtaining at least some of the information from an Iur interface between radio network controllers in the macrocell network.

7. A handover protocol analyser configured for assisting handover of a connection to to a user terminal from a macrocell base station to a small cell base station,
the analyser being configured to monitor in the macrocell network for information which may be useful to a small cell gateway in effecting handover to the small cell under the control of the gateway,
the analyser also being configured to forward the information to the gateway upon detecting an instruction for the macrocell base station to handover to a small cell under the control of the gateway.

8. The handover protocol analyser according to claim 7, in which the handover protocol analyser is connected to at least one interface in the macrocell network.

9. The handover protocol analyser according to claim 8, in which the analyser is configured to detect the instruction to the macrocell base station to handover to a small cell on an Iu interface (19) between a base station controller (12) and a higher level controller (22).

10. The handover protocol analyser according to any of claim 8 or claim 9, in which the analyser is configured to obtain at least some of the information from an Iub _{[p1]}interface (16) between the base station controller (12) and the macrocell base station (14)

11. The handover protocol analyser according to any of claims 7 to 10, in which the analyser stores the information for forwarding to the gateway.

12. The handover protocol analyser according to any of claims 7 to 11, in which the analyser is configured to obtain at least some of the information from an Iur interface bwtween radio network controllers in the macrocell network

13. A telecommunications network comprising a macrocell base station, a small cell base station under the control of a small cell gateway, and a handover protocol analyser configured for assisting handover of a connection to a user terminal from the macrocell base station to the small cell base station,
the analyser being configured to monitor in the network for information which may be useful to a small cell gateway in effecting handover to the small cell under the control of the gateway,
the analyser also being configured to forward the information to the gateway upon detecting an instruction for the macrocell base station to handover to a small cell under the control of the gateway.

14. A telecommunications network according to claim 11, in which the handover protocol analyser is connected to at least one interface in the network.

15. A telecommunications network according to claim 12, in which, in use, the instruction for the macrocell base station to handover to a small cell is detected by the analyser on an Iu interface (19) between a base station controller (12) and a higher level controller (22) in the network.

## Amended claims

### Amended claims in accordance with Rule 137(2) EPC.

**1.** A method of handover of a connection with a user terminal from a macrocell base station (14) to a small cell base station (30), by
Obtaining information in the macrocell network which may be useful to a small cell gateway in effecting handover to a small cell base station (30) under the control of the gateway; and
upon detecting an instruction for the macrocell base station to handover to a small cell under the control of the gateway, forwarding the information to the gateway;
**characterised in that**
said obtaining information in the macrocell network is by monitoring in the macrocell network for information, the monitoring being checking for certain types of messaging in transmissions without interfering with the transmissions; and
the monitoring and forwarding are done by a handover protocol analyser connected to at least one interface in the macrocell network.

**2.** A method according to claim 1, in which the instruction for the macrocell base station to handover to a small cell is detected on an Iu interface (19) between a base station controller (12) and a higher level controller (22).

**3.** A method according to any preceding claim, in which the monitoring comprises obtaining at least some of the information from an Iub interface (16) between the base station controller (12) and the macrocell base station (14)

**4.** A method according to any preceding claim, in which the monitoring comprises storing the information for forwarding to the gateway.

**5.** A method according to any preceding claim, in which the monitoring comprises obtaining at least some of the information from an Iur interface between radio network controllers in the macrocell network.

**6.** A means configured for assisting handover of a connection to a user terminal from a macrocell base station to a small cell base station,
the means being configured to obtain information in the macrocell network which may be useful to a small cell gateway in effecting handover to the small cell under the control of the gateway;
the means also being configured to forward the information to the gateway upon detecting an instruction for the macrocell base station to handover to a small cell under the control of the gateway;
**characterised in that**
the means is configured to obtain information in the network by monitoring in the network for information, the monitoring being by checking for certain types of messaging in transmissions without interfering with the transmissions; and
the means is a handover protocol analyser, the handover protocol analyser being connected to at least one interface in the macrocell network.

**7.** The handover protocol analyser according to claim 6, in which the analyser is configured to detect the instruction to the macrocell base station to handover to a small cell on an Iu interface (19) between a base station controller (12) and a higher level controller (22).

**8.** The handover protocol analyser according to any of claim 6 or claim 7, in which the analyser is configured to obtain at least some of the information from an lub interface (16) between the base station controller (12) and the macrocell base station (14)

**9.** The handover protocol analyser according to any of claims 6 to 8, in which the analyser stores the information for forwarding to the gateway.

**10.** The handover protocol analyser according to any of claims 6 to 9, in which the analyser is configured to obtain at least some of the information from an Iur interface between radio network controllers in the macrocell network

**11.** A telecommunications network comprising a macrocell base station, a small cell base station under the control of a small cell gateway, and a means configured for assisting handover of a connection to a user terminal from the macrocell base station to the small cell base station,
the means being configured to obtain information in the network which may be useful to a small cell gateway in effecting handover to the small cell under the control of the gateway;
the means also being configured to forward the information to the gateway upon detecting an instruction for the macrocell base station to handover to a small cell under the control of the gateway;
**characterised in that**
the means is configured to obtain information in the network by monitoring in the network for information, the monitoring being by checking for certain types of messaging in transmissions without interfering with the transmissions, and
in which the means is a handover protocol analyser, the handover protocol analyser being connected to at least one interface in the network.

**12.** A telecommunications network according to claim 11, in which, in use, the instruction for the macrocell base station to handover to a small cell is detected by the analyser on an Iu interface (19) between a base station controller (12) and a higher level controller (22) in the network.
